Europäisches Patentamt

(19) European Patent Office

Office européen des brevets

(11) Publication number: **0 043 721**
**B1**

(12) **EUROPEAN PATENT SPECIFICATION**

(45) Date of publication of patent specification: **06.02.85**

(21) Application number: **81303060.8**

(22) Date of filing: **03.07.81**

(51) Int. Cl.⁴: **H 04 N 1/028, H 04 N 9/04**

(54) Device for scanning coloured originals.

(30) Priority: **03.07.80 US 165912**

(43) Date of publication of application:
**13.01.82 Bulletin 82/02**

(45) Publication of the grant of the patent:
**06.02.85 Bulletin 85/06**

(84) Designated Contracting States:
**DE GB**

(56) References cited:
**EP-A-0 008 672**
**EP-A-0 008 673**
**US-A-4 121 244**
**US-A-4 204 230**

(73) Proprietor: **XEROX CORPORATION**
**Xerox Square - 020**
**Rochester New York 14644 (US)**

(72) Inventor: **Sprague, Robert A.**
**13755 Calle Tacuba**
**Saratoga California (US)**

(74) Representative: **Weatherald, Keith Baynes et al**
**European Patent Attorney Rank Xerox Limited**
**Patent Department 338 Euston Road**
**London NW1 3BH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The invention relates to a device for scanning coloured originals, including an integrated detector having parallel linear arrays of photodetectors uniformly spaced-apart along the length of each array, different colour filters in front of said arrays transmitting light in different regions of the spectrum, and means for sequentially imaging successive scanlines of an original onto the detector so that an image of each line falls successively on the arrays, whereby each array generates output signals representing the respective colour information of successive lines on the original.

Detector arrays have been known for several years to be effective light sensitive devices for image readout. A plurality of such arrays can be used as a color scanner, as, for example, in a color television system. Alternatively, a single area detector array may be used in conjunction with a finely patterned color encoding filter, as is disclosed in U.S. Patent 4,121,244, entitled "Solid State Color Imaging Apparatus". This patent among other things, discusses the use of a complex pattern of color filters superimposed on the detectors to effect the color separation desired. A simpler color scanner for scanning documents is hereinafter described which utilizes a line scan configuration and no finely patterned filter.

EP—A3—0 008 673 (which is equivalent to US—A—4 271 428) discloses the use of a double array for generating color TV signals. Whereas one array is dedicated to receipt of signals of one colour at full resolution, the other array has sets of alternating photosites, with each set receiving light of different colours. Whereas the resultant output is excellent for television, it does not provide the high resolution, complementary colour signals needed for the faithful reproduction of coloured documents or pictures.

According to the present invention, a strip of a document to be read is illuminated and imaged onto a single integrated detector array made up of several linear arrays. Each linear detector is read out to provide a line scan of the document. The document is then translated across the line, or its image is caused to translate to achieve the same result, and each array is read out again, resulting in raster input scanning of a document. The detector array consists of three or more identical linear arrays fabricated on the same integrated detector array and located one above the other and horizontally aligned. Each one of the three arrays is covered with a color filter, so that it only sees one color (e.g. red, green, or blue). By reading the three arrays out in parallel, all three colors on the document are read simultaneously. The only difference between the three images (besides color) is that at any point in time, each one is at a different height on the document. This difference is eliminated by simply remembering which line each image is on and correctly formatting the data which reach a printing device or are stored in a memory.

For a more complete understanding of the invention, reference may be had to the following detailed description of the invention in conjunction with the drawings wherein:

Figure 1 is a schematic representation of one embodiment of the present invention utilizing four linear arrays on the same detector chip:

Figure 2 shows a front view of the detectors and color filter depicted in Figure 1.

Figure 3 is a schematic representation of another embodiment of the present invention utilizing three or more area arrays in place of the linear arrays shown in Figure 1; and

Figure 4 is a layout diagram of a "staggered aperture" mask which is suitable for use with the embodiment shown in Figure 3 and described in U.S. Patent Number 4,204,230.

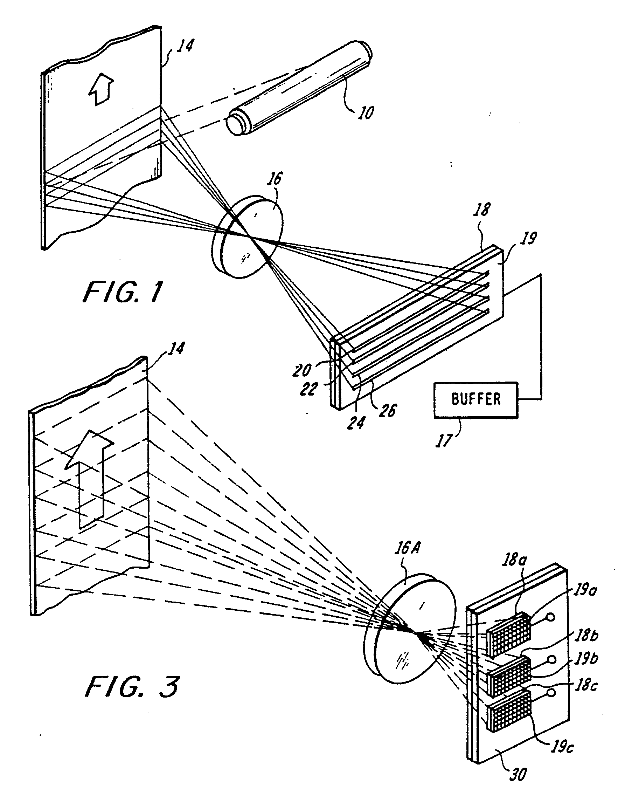

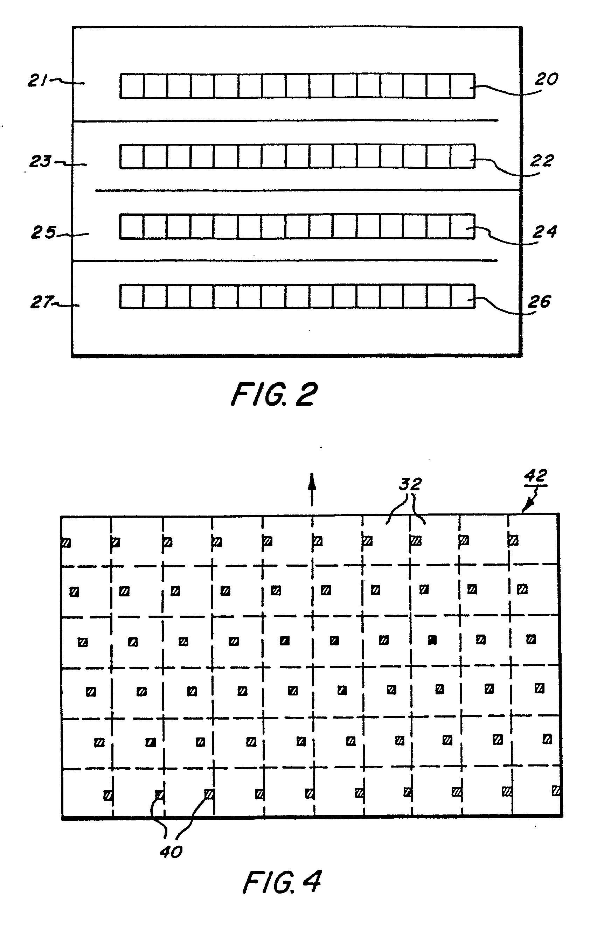

The principles of the present invention are set forth in Figure 1. A light source 10 shines light on a document 14 or other object to be scanned. The document 14 has a relative movement with respect to the rest of the system in an upward direction. That is, document 14 would be moving up vertically as seen in Figure 1 or the system would have other scan apparatus to move the imaging system down across the document. The light would be reflected off document 14 and focused via lens 16 onto a linear array of detectors in an integrated detector array via the color filter 18. Figure 2 shows a front view of the array and the filter. The top filter 21 could be a filter of the type that would pass red light onto detector set 20. Filter 23 could be a filter that would pass blue light onto detectors 22 and filter 25 could be a filter that passes green light onto detectors 24. Filter 27 could have a fourth color filter if desired or could be left open to allow the light to pass through onto detectors 26 for black and white detection or to detect brightness information to allow for more accurate signal enhancement by subsequent circuitry. Alternatively, the number of arrays arranged in this manner could be changed to some other number to add more or less color channels. The light passing through the filter array 18 would impinge upon a CCD (charge coupled device) array as seen in Figure 3.

Thus, in operation, the light 10 is seen to impinge upon document 14. Lens 16 images the document onto the filter array 18 which would apply the colors passed through the filter to the CCD detector array 30, seen in Figure 1, 2, or 3. As can be seen in Figure 1, by the use of the four filters 21, 23, 25, 27, four separate scan lines are seen on document 14. Thus, for the embodiment shown in Figure 1, each line would have to be scanned electronically four separate times, one for each array set 20, 22, 24, and 26. Inasmuch as each line is scanned three or four times, subsequent electronics 17 would have to be utilized to store the information for each line and to correlate them so that the red, blue, green, and brightness information can be correlated for each line of data scanned from the document 14.

U.S. Patent Number 4,204,230 discloses a system utilizing a two dimensional integrated detector array for use in achieving high resolution raster input scanning. The present invention could easily use such "staggered aperture" arrays in place of the linear arrays described above and shown in Figure 1, resulting in the array shown in Figure 3, each part of which is covered with the aperture mask 42 shown in Figure 4, of which each incremental area 32 is opaque except for a window 40. The system operation would be identical to that described in the above discussion, with the area arrays acting in conjunction with an external data buffer to provide the same result achieved with linear arrays. This substitution of area arrays for linear arrays is fully described in the above mentioned earlier U.S. Patent.

The photodetector array of the present application has been described in conjunction with charge coupled device technology. Any technology which presently or in the future allows for fabrication of imaging cells arranged in the manner set forth in the present application may be used.

## Claims

1. A device for scanning coloured originals, including an integrated detector (19) having parallel linear arrays (20, 22, 24) of photodetectors uniformly spaced-apart along the length of each array, different colour filters in front of said arrays transmitting light in different regions of the spectrum, and means for sequentially imaging successive scanlines of an original (14) onto the detector so that an image of each line falls successively on the arrays, whereby each array generates output signals representing the respective colour information of successive lines on the original, characterised in that the integrated detector (19) has at least three parallel linear arrays (20, 22, 24) of photodetectors, the photodetectors of each array being transversely aligned with photodetectors in adjacent arrays, each linear array producing output signals of the same resolution, and in that in front of each linear array (20, 22, 24, 26) a colour filter (21, 23, 25) is provided transmitting light in a single colour, which is different for each filter.

2. The device as claimed in claim 1, in which each scanline is scanned once by each array, and including means (17) for storing the output signals from each array so that the different colour signals from the arrays can be correlated for each line scan.

3. The device as claimed in claim 1 or 2, in which the detector has a fourth linear array (26) of photodetectors which is not covered by a filter, the fourth array (26) providing either for the detection of black and white information or the detection of brightness information to allow for more accurate signal enhancement.

4. The device as claimed in any preceding claim, in which each linear array is replaced by a staggered-aperture array.

## Patentansprüche

1. Vorrichtung zum Abtasten von farbigen Originalen mit einem integrierten Detektor (19), der parallele Linearanordnungen (20, 22, 24) von mit gleichmäßigen gegenseitigen Abständen entlang der Länge jeder Anordnung angebrachten Photodetektoren aufweist, mit verschiedenen Farbfiltern vor den genannten Anordnungen, die Licht unterschiedlicher Bereiche des Spektrums durchlassen, und mit einer Einrichtung zum aufeinanderfolgenden Abbilden aufeinanderfolgender Abtastzeilen eines Originals (14) auf dem Detektor, so daß ein Abbild jeder Zeile nacheinander auf die Anordnung fällt, wobei jede Anordnung Ausgangssignale erzeugt, die die jeweilige Farbinformation aufeinanderfolgender Zeilen auf dem Original darstellen, dadurch gekennzeichnet, daß der integrierte Detektor (19) wenigstens drei parallele Linearanordnungen (20, 22, 24) von Photodetektoren aufweist, wobei die Photodetektoren jeder Anordnung in Querrichtung auf die Photodetektoren in benachbarten Anordnungen ausgerichtet sind und jede Linearanordnung Ausgangssignale gleicher Auflösung erzeugt, und daß vor jeder Linearanordnung (20, 22, 24, 26) ein Farbfilter (21, 23, 25) vorgesehen ist, der Licht einer einzige Farbe durchläßt, welche für jeden Filter anders ist.

2. Vorrichtung nach Anspruch 1, in welcher jede Abtastzeile durch jede Anordnung einmal abgetastet wird, und die eine Einrichtung (17) zum Speichern der Ausgangssignale von jeder Anordnung aufweist, so daß die verschiedenen Farbsignale von den Anordnungen für jede Abtastzeile aufeinander abgestimmt werden können.

3. Vorrichtung nach Anspruch 1 oder 2, in welcher der Detektor eine vierte Linearanordnung (26) von Photodetektoren aufweist, die nicht von einem Filter abgedeckt ist, wobei die vierte Anordnung (26) entweder zum Feststellen von Schwarz-Weiß-Informationen oder zum Feststellen von Helligkeitsinformationen vorgesehen ist, um genauere Signalverstärkung zu ermöglichen.

4. Vorrichtung nach irgendeinem vorhergehenden Anspruch, in welcher jede Linearanordnung durch eine Anordnung mit versetzten Öffnungen ersetzt ist.

## Revendications

1. Dispositif de balayage d'originaux en couleurs, comprenant un détecteur intégré (19) comportant des réseaux linéaires parallèles (20, 22, 24) de photodétecteurs espacés uniformément les uns des autres suivant la longueur de chaque réseau, des filtres de couleurs différentes à l'avant des réseaux transmettant la lumière dans différentes régions du spectre, et un moyen pour séquentiellement former des images de lignes de balayage successives d'un original (14) sur le détecteur de sorte qu'une image de chaque ligne tombe successivement sur les réseaux, d'où il résulte que chaque réseau génère des signaux de sortie représentant l'information sur la couleur respective de lignes successives de l'original, caractérisé en ce que le détecteur intégré (19) comporte au moins trois réseaux linéaires parallèles (20, 22, 24) de photodétecteurs, les photodétecteurs de chaque réseau étant alignés transversalement avec des photodétecteurs de réseaux contigus, chaque réseau linéaire produisant des signaux de sortie de la même résolution, et en ce qu'à l'avant de chaque réseau linéaire (20, 22, 24, 26) un filtre de couleur (21, 23, 25) est prévu qui transmet la lumière dans une seule couleur, laquelle est différente pour chaque filtre.

2. Dispositif selon la revendication 1, dans lequel chaque ligne de balayage est balayée une fois par réseau, et comprenant un moyen (17) pour stocker les signaux de sortie provenant de chaque réseau de façon que les différents signaux de couleur provenant des réseaux puissent être l'objet d'une corrélation pour chaque balayage de ligne.

3. Dispositif selon la revendication 1 ou la revendication 2, dans lequel le détecteur comporte un quatrième réseau linéaire (26) de photodétecteurs qui n'est pas couvert par un filtre, le quatrième réseau (26) fournissant soit la détection d'une information en noir et blanc soit la détection d'une information sur la luminosité afin de permettre un réhaussement de signal plus précis.

4. Dispositif selon l'une quelconque des revendications précédentes, dans lequel chaque réseau linéaire est remplacé par un réseau aux ouvertures en quinconce.

FIG. 1

FIG. 3

BUFFER

FIG. 2

FIG. 4